(19) **Europäisches Patentamt**
**European Patent Office**
**Office européen des brevets**

(11) Publication number : **0 404 275 B1**

(12) **EUROPEAN PATENT SPECIFICATION**

(45) Date of publication of patent specification :
23.10.91 Bulletin 91/43

(51) Int. Cl.⁵ : **G01B 7/03, B23Q 3/155**

(21) Application number : **90202139.3**

(22) Date of filing : **17.09.86**

(54) Exchangeable tools.

(30) Priority : **17.09.85 GB 8522984**

(43) Date of publication of application :
**27.12.90 Bulletin 90/52**

(45) Publication of the grant of the patent :
**23.10.91 Bulletin 91/43**

(84) Designated Contracting States :
**CH DE FR GB IT LI SE**

(56) References cited :
**EP-A- 0 132 528**
**EP-A- 0 142 373**
**DE-A- 1 652 694**
**GB-A- 2 141 364**
**US-A- 3 823 466**

(60) Publication number of the earlier application in
accordance with Art. 76 EPC : **0 236 414**

(73) Proprietor : **Renishaw plc**
**New Mills**
**Wotton-Under-Edge Gloucestershire GL12**
**8JR (GB)**

(72) Inventor : **Chase, James Lancelot Tyndale**
**17 Tabernacle Road, Wotton-under-Edge**
**Gloucestershire GL12 7DR (GB)**

(74) Representative : **Jackson, John Timothy et al**
**Renishaw plc Patent Department New Mills**
**Wotton-under-Edge Gloucestershire GL12 8JR**
**(GB)**

## Description

This invention relates to exchangeable tools, for example exchangeable measuring tools used for inspection of workpieces on a co-ordinate measuring machine, or for a machine tool.

An example of a tool change apparatus with such exchangeable tools is shown in our international patent application published under the number WO85/02138. The apparatus exemplified by that application comprises a head for releasably supporting one of a plurality of tools. The tool may for example be a probe which generates a signal in response to contact with a workpiece. Such a signal is then transmitted via confronting electrical contacts on the tool and on the head to a computer (which may be part of the co-ordinate measuring machine or machine tool). Alternatively, GB-A-2141364 discloses infra-red signal transmission. In practice, an interface is commonly required to condition the signal before passing it to the computer, and/or also to provide appropriate power and possibly control signals to the tool.

When tools are disconnected and connected to the head, the interface must meet any changed requirements of the tools with respect to signal conditioning, power supply and/or control signals.

It is known from DE-A-1652694, EP-A-0132528 and US-A-3823466 to provide identification means on a cutting tool for a machine tool, which can be read to identify the tool, but such cutting tools do not suffer from the above problem and therefore these documents neither address that problem nor provide a solution to it.

According to this invention we provide a tool for a co-ordinate measuring machine or a machine tool, having an electrical circuit for producing or transmitting signals ; a plurality of electrical contacts for co-operating with confronting contacts on a head of the machine, some of said contacts being connected to said electrical circuit for transmitting said signals ; and characterised by a resistor connected to some of said contacts.

Such a tool can co-operate with a signal conditioning unit connected to said confronting contacts on the head of the machine, having resistance determining means for connection to said resistor. The signal from the tool can then be processed in accordance with the output of the resistance determining means.

An embodiment of the invention will be described by way of example with reference to the accompanying drawings, in which :

Fig 1 is a diagrammatic layout of a tool change apparatus,

Fig 2 is a more detailed schematic diagram of part of the apparatus,

Fig 3 is a flow chart explaining the operation of the apparatus, and

Fig 4 shows diagrammatically an extension bar for use with the apparatus

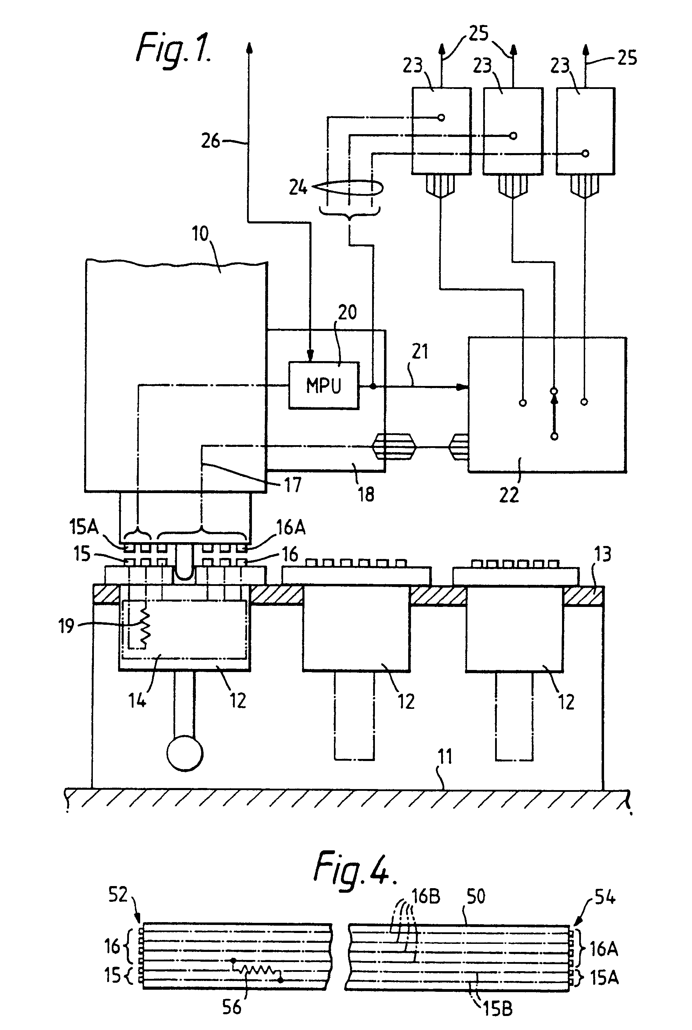

Referring to Fig 1, a co-ordinate measuring machine (known per se and not described in detail) has a head 10 movable relative to a table 11 on which a plurality of different tools 12 are arranged in respective storage locations of a support 13. The head 10 is adapted to be connected to any one of the tools 12 and to move the tool to a workpiece (not shown) for measuring or inspecting the workpiece all as known in general from our said International Patent Application.

The tools 12 may include a probe, known per se, for sensing contact with a workpiece and opening electrical contacts within the probe when the workpiece is touched. They may also include analogue probes for responding to contact with the workpiece, proximity probes, crack detecting probes, laser and other optical measuring probes, video cameras etc. enabling the co-ordinate measuring machine to be used as a very flexible inspection system for inspecting a wide variety of quality aspects of the workpiece.

Each tool 12 has an electric circuit 14 connected to a plurality of contacts 15, 16 co-operating with confronting contacts 15A, 16A on the head 10 to connect the tool circuit 14 to a signal conditioning unit ("SCU") 18 provided on the head 10. Certain contacts, 15, are used to enable the SCU to recognise the particular tool being connected to the head 10 while other contacts, 16, are used for transmitting an operational group of signals 17 to and from the tool.

The tools 12 include respective resistors 19 of different resistance value connected to the contacts 15.

The SCU 18 of the present embodiment includes means (described below) for determining the resistance of the resistor of whatever tool 12 is connected to the head thereby to positively identify the tool. In this example a microprocessor system 20 (also described below) is used in the SCU for this purpose and is adapted to produce discrete identifying signals 21 for the respective tools 12. However, the same purpose could obviously be achieved by non-microprocessor circuitry if preferred.

Said other contacts 16 are connected through the SCU 18 to a multiplexer 22 for transmission of the operational signal groups from the tool 12 to a respective interface unit 23 where the operational signals are processed to appear at 25 in useful form for further processing by computer or for display e.g. in the form of printed characters. The interface 23 may also provide appropriate power and/or control signals to the respective tool 12 via the multiplexer.

The multiplexer 22 is operated by the SCU in response to the identifying signals 21 so that the operational group of signals 17 of any one tool 12 identified by the SCU 18 is connected by the multiplexer 22 to the appropriate interface unit 23. The SCU 18 is also adapted to produce signals 24 responsive to the respective signals 21 and connected to the respective interface units 23 to initiate the processing of the operational signals 17 connected thereto by the multiplexer. Such processing may include the digitisation of analogue values. The SCU itself may include amplifiers for amplifying any such analogue values prior to onward transmission. Furthermore, the microprocessor 20 is in communication via a channel 26 with a host computer of the coordinate measuring machine, which has overall control of the machine and governs the picking up, use and setting down of the tools 12 by the head 10.

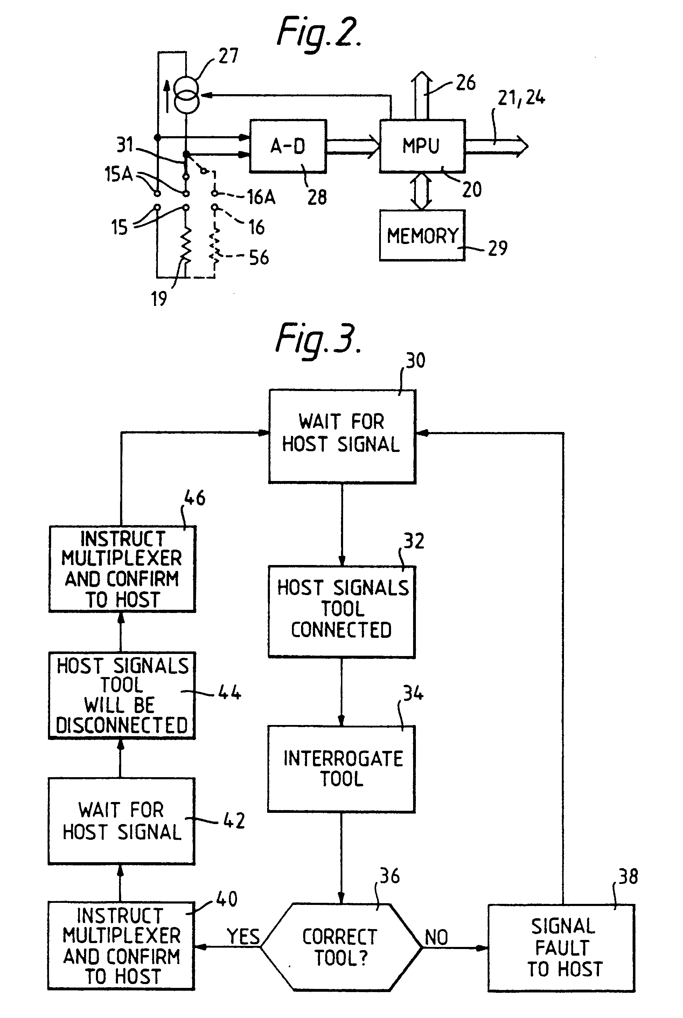

Fig 2 shows more detail of part of the SCU 18, and Fig 3 shows the sequence of operations performed by the microprocessor 20. At step 30 in Fig 3, the microprocessor is waiting for a signal from the host computer. At 32, a signal is received from the host via the communication channel 26, advising the microprocessor that the host has caused the head 10 to pick up a tool 12 from a given location on the support 13 (in the manner described in the above-mentioned international patent application). The signal includes a code for identifying the tool concerned. On receipt of this signal, at step 34, the microprocessor interrogates the tool 12 which has been picked up. It does this by switching on a constant current source 27 within the SCU, to pass a known constant current through the resistor 19 of the tool via the contacts 15, 15A. It then receives an input value from an analogue-to-digital converter 28, indicating the voltage developed across the resistor 19 by the constant current. This input value, of course, is unique to the tool picked up. Raving received the value, the current source 27 is switched off.

Next, at step 36, the microprocessor 20 takes the tool identification code received from the host at step 32 and addresses a table stored in its memory 29. From the table, it obtains a corresponding voltage value, being the value expected to be produced in the converter 28 by the tool which the host intended to be picked up. The microprocessor decides whether the correct tool has in fact been picked up by comparing this expected value with the value actually received in step 34. If the values do not agree (to within a specified tolerance) the microprocessor proceeds to step 38, where it signals a fault condition to the host. The host may then halt operation of the machine, or possibly it may attempt to correct the fault. Such a fault may occur for example, if the machine operator has placed the wrong tool in the chosen location of the support 13, or if the tool has not been successfully picked up for some reason. Signalling the fault in this way prevents the host from continuing its cycle with the wrong tool and possibly causing collision damage between the tool and the workpiece.

Assuming that the correct tool is identified, then the microprocessor sends the signal 21 to the multiplexer 22 to connect the corresponding interface 23 to the tool 12 (step 40). The signal 24 is also sent to the appropriate interface to activate it. Prior to this time, no interface at all has been connected to the tool. This is important in order to ensure that the tool is not inadvertently connected to an incorrect power supply which could damage it. Saving instructed the multiplexer and corresponding interface, the microprocessor confirms this fact to the host.

After this step, the microprocessor then simply waits for a further signal from the host (step 42), during which time the host is controlling a measurement or inspection operation on the workpiece, using the selected tool 12. When this is completed on returning the tool to its storage location on the support 13 and immediately prior to disconnection of the tool from the head 10, the host again signals the microprocessor 20 (step 44). The microprocessor then issues a signal 24 to disable the selected interface 23, and a signal 21 to cause the multiplexer 22 to disconnect the interface from the contacts 16A (step 46). Saving done so, it confirms this fact to the host which will proceed to disconnect the tool from the head. The microprocessor can now return directly to step 30 to repeat the whole process for the next selected tool.

Fig.4 illustrates a further type of tool, one or more of which may be present in the support 13. This is an extension bar tool 50 which can be used as an accessory in conjunction with any one of the measuring tools 12. One end 52 of the bar is provided with mechanical and electrical connections identical with the tools 12, in order that it can be picked up by the head 10 (though the mechanical connections are not shown in the figure). The other end 54 has mechanical and electrical connections identical with the head 10, so that once the bar has been picked up by the head, it can then in turn pick up either a selected tool or another extension bar 50. The use of an extension bar is known per se, and enables the measuring tool 12 to inspect regions of the workpiece which would otherwise be inaccessible, e.g. the internal surfaces of a bore. Often, to provide the greatest flexibility, several extension bars 50 of differing lengths will be stored in the support 13.

To permit identification of the tools 12 in exactly the same manner as above, and to allow for transmission of signals and power to and from the tool, a series of parallel electrical lines 15B, 16B run the length of the extension bar 50, connecting the contacts 15,16 at the end 52 with the respective contacts 15A, 16A at the end 54. Additionally, it is desirable to be able to identify the extension bar or combination of bars which has been connected. To this end, each bar is provided with a unique-valued resistor 56 connected between one of the lines 15B and one of the lines 16B. The microprocessor 20 controls a switch 31 to connect the constant current source 27 and analogue-to-digital converter 28 across the corresponding contacts 15A, 16A. The identifying resistor 56 is interrogated in exactly the same way as described above for the resistor 19. If two or more extension bars 50 are connected in series, their resistors will appear in parallel to decrease the voltage measured by the analogue-to-digital converter. The combination of bars can be uniquely identified if the respective resistance values are suitable chosen : for example, so that the conductance of each bar is proportional to its length, or is in a binary sequence much as 100 μS, 200 μS, 400 μS, 800 μS etc.

The resistor 56 is connected between a line 15B and a line 16B, rather than across the two lines 15B, in order to facilitate identification of the measurement tools 12 separately from the extension bar tools 50. Since this reduces the number of the electrical connections 16, 16A which are available for signal and power purposes, and since it is likely that the number of pins available for these purposes will be limited, it may be desirable to use the two connections 15, 15A for both identification functions. This can be done if the extension bars (for example) are each identified with a unique capacitance value instead of a unique resistance value ; but this leads to an excessively complicated arrangement and is not preferred.

The tool change apparatus described is particularly useful with measuring and inspection tools on co-ordinate measuring machines, and can also be used with measuring and inspection tools on an automatic machine tool. It enables the correct interface to be selected and prevents electrical and mechanical damage being caused if the wrong tool is picked up. However, it is also useful for confirming the identity of tools not themselves intended for measurement or inspection, including the accessory extension bars already discussed, and even (if desired) the cutting tools of a machine tool, priovided an appropriate resistor for identification can be applied to them.

## Claims

1. A tool (12 ; 50) for a coordinate measuring machine or a machine tool, having an electrical circuit (14 ; 16B) for producing or transmitting signals ; a plurality of electrical contacts (15, 16) for cooperating with confronting contacts on a head of the machine, some of said contacts (16) being connected to said electrical circuit (14 ; 16B) for transmitting said signals ; and characterised by a resistor (19 ; 56) connected to some of said contacts (15 ; 15, 16).

2. A tool according to claim 1, wherein said tool is a measuring tool (12).

3. A tool according to claim 1 or claim 2, wherein said tool (12) is releasably supported by an extension bar (50) provided between the tool (12) and the head of the machine, said electrical contacts (15, 16) on the tool cooperating with confronting contacts on the extension bar (50).

4. A tool according to claim 1, wherein said tool is an extension bar (50) having means for releasably supporting a further tool (12 ; 50).

5. A tool according to any one of the preceding claims in combination with a signal conditioning unit (18) connected to said confronting contacts on the head of the machine, the signal conditioning unit including resistance determining means (20, 27, 28) for connection to said resistor (19 ; 56).

6. A tool and signal conditioning unit according to claim 5, further combined with means (22, 23, 24) for processing the output of said electrical circuit (14 ; 16B) in accordance with the output of the resistance determining means (20, 27, 28).

7. A tool and signal conditioning unit according to claim or claim 6, wherein the resistance determining means include a constant current source (27).

## Patentansprüche

1. Werkzeug (12 ; 50) für eine Koordinaten-Meßmaschine oder eine Werkzeugmaschine mit einer elektrischen Schaltung (14 ; 16B) zum Erzeugen oder Senden von Signalen ; einer Vielzahl von elektrischen Kontakten (15, 16) zum Zusammenwirken mit gegenübergestellten Kontakten an einem Kopf der Maschine, wobei einige Kontakte (16) mit der elektrischen Schaltung (14, 16B) zum Senden der Signale verbunden sind ; und gekennzeichnet durch einen an einigen der Kontakte (15 ; 15, 16) angeschlossenen Widerstand (19 ; 56).

2. Werkzeug nach Anspruch 1, bei dem das Werkzeug ein Meßwerkzeug (12) ist.

3. Werkzeug nach Anspruch 1 oder 2, bei dem das Werkzeug lösbar durch einen zwischen dem Werkzeug (12) und dem Kopf der Maschine vorgesehenen Verlängerungsstab (50) gehalten ist, wobei die elektrischen Kontakte (15, 16) an dem Werkzeug mit gegenübergestellten Kontakten an dem Verlängerungsstab (50) zusammenwirken.

4. Werkzeug nach Anspruch 1, bei dem das Werkzeug ein Verlängerungsstab (50) mit Mitteln zum lösbaren Halten eines weiteren Werkzeugs (12 ; 50) ist.

5. Werkzeug nach einem der vorangehenden Ansprüche in Kombination mit einer an den gegenübergestellten Kontakten an dem Kopf der Maschine verbundenen Signalaufbereitungs-Einheit (18), wobei die Signalaufbereitungs-Einheit Widerstandsbestimmungs-Mittel (20, 27, 28) zur Verbindung mit dem Widerstand (19 ; 56) enthält.

6. Werkzeug und Signalaufbereitungs-Einheit nach Anspruch 5, weiter kombiniert mit Mittel (22, 23, 24) zum Bearbeiten des Ausgangssignals der elektrischen Schaltung (14, 16B) in Übereinstimmung mit dem Ausgangssignal des Widerstandsbestimmungs-Mittels (20, 27, 28).

7. Werkzeug und Signalaufbereitungs-Einheit nach Anspruch 5 oder 6, wobei das Widerstandsbestimmungs-Mittel eine Konstantstromquelle (27) enthält.

**Revendications**

1. Outil (12 ; 50) pour une machine de mesure de coordonnées ou pour une machine-outil, présentant un circuit électrique (14 ; 16B) pour produire ou transmettre des signaux ; une pluralité de contacts électriques (15, 16) pour coopérer avec les contacts placés en regard sur une tête de la machine, certains desdits contacts (16) étant connectés audit circuit électrique (14 ; 16B) pour transmettre lesdits signaux ; et caractérisé par une résistance (19 ; 56) connectée à certains desdits contacts (15 ; 15, 16).

2. Outil selon la revendication 1, caractérisé en ce que ledit outil est un outil de mesure (12).

3. Outil selon la revendication 1 ou la revendication 2, caractérisé en ce que ledit outil (12) est supporté de manière à pouvoir être relâché par une barre d'allongement (50) prévue entre l'outil (12) et la tête de la machine, lesdits contacts électriques (15, 16) sur l'outil coopérant avec les contacts placés en regard sur la barre d'allongement (50).

4. Outil selon la revendication 1, caractérisé en ce que ledit outil est une barre d'allongement (50) présentant des moyens pour supporter de manière à pouvoir le relâcher un autre outil (12 ; 50).

5. Outil selon l'une quelconque des revendications précédentes caractérisé en ce qu'il est associé à une unité de conditionnement de signaux (18) connectée auxdits contacts placés en regard sur la tête de la machine, l'unité de conditionnement de signaux comprenant des moyens de détermination de la résistance (20, 27, 28) prévus pour être connectés à ladite résistance (19 ; 56).

6. Outil et unité de conditionnement de signaux selon la revendication 5, caractérisés en ce qu'ils sont en outre associés à des moyens (22, 23, 24) prévus pour traiter le signal de sortie dudit circuit électrique (14 ; 16B) en fonction du signal de sortie des moyens de détermination de la résistance (20, 27, 28).

7. Outil et unité de conditionnement de signaux selon la revendication 5 ou la revendication 6, caractérisés en ce que les moyens de détermination de la résistance comprennent une source de courant constant (27).

## Fig.1.

## Fig.4.

*Fig.2.*

*Fig.3.*